# EUROPÄISCHE PATENTANMELDUNG

(11) **EP 1 080 865 A1**
(43) Veröffentlichungstag der Anmeldung: **07.03.2001**
(21) Anmeldenummer: 00116677.6
(22) Anmeldetag: 02.08.2000
(51) Int. Cl.: B29C 47/42, C09J 7/02

(54) **Verfahren zur kontinuierlichen, lösungsmittel-und mastikationsfreien Herstellung von druckempfindlichen Selbstklebemassen auf Basis von nicht-thermoplastischen Elastomeren sowie deren Beschichtung zur Herstellung von selbstklebenden Artikeln**

(30) Priorität: 18.08.1999 DE 19939077
(71) Anmelder: Beiersdorf AG, 20245 Hamburg (DE)
(72) Erfinder: Massow, Klaus, 22147 Hamburg (DE); Hansen, Sven, 20255 Hamburg (DE); Hirsch, Ralf, 25451 Quickborn (DE); Henke, Frank, Dr., 21629 Neu Wulmstorf (DE)

(57) **Zusammenfassung**

Verfahren zur kontinuierlichen lösungsmittelfreien und mastikationsfreien Herstellung von Selbstklebemassen auf Basis von nicht-thermoplastischen Elastomeren in einem kontinuierlich arbeitenden Planetwalzenextruder mit einem Füll- und einem Compoundierteil (2,5), wobei das Compoundierteil (5) des Planetwalzenextruders zumindest von einem Walzenzylinder (5a-5c) gebildet wird, bestehend aus
a) Aufgabe der Festkomponenten der Selbstklebemasse wie Elastomere und Harze in den Füllteil (2) des Planetwalzenextruders, gegebenenfalls Aufgabe von Füllstoffen, Farbstoffen und/oder Vernetzern,
b) Übergabe der Festkomponenten der Selbstklebemasse aus dem Füllteil (2) in den Compoundierteil (5),
c) Zugabe der Flüssigkomponenten der Selbstklebemasse wie Weichmacher, Vernetzer und/oder weiterer klebrig machender Harze in den Compoundierteil (5),
d) Herstellung einer homogenen Selbstklebemasse im Compoundierteil (5) und
g) Austragen der Selbstklebemasse,
wobei die Temperaturen im Walzenzylinder (5a-5c) innerhalb der Verfahrenslänge ein Maximum durchlaufen und damit höher sind als die Walzenzylindertemperaturen am Anfang und Ende des Planetwalzenextruders.

## Beschreibung

Die vorliegende Erfindung bezieht sich auf ein Verfahren zur kontinuierlichen, lösungsmittel- und mastikationsfreien Herstellung von druckempfindlichen Selbstklebemassen auf Basis nicht-thermoplastischer Elastomerer unter Verwendung von klebrigmachenden Harzen, typischen Kautschukweichmachern, gegebenenfalls Füllstoffen und thermisch aktivierbaren Vernetzern und ihrer Beschichtung zur Herstellung von selbstklebenden Artikeln, insbesondere hochleistungsfähiger selbstklebender Bänder.

Für das anwendungstechnische Anforderungsprofil von druckempfindlichen Klebersystemen und den damit hergestellten Haftklebeartikeln sind die zwei physikalischen Phänomene Adhäsion und Kohäsion der Haftkleberschichten von grundsätzlichem Inhalt. Die Adhäsion wird im technischen Sprachgebrauch unter den Begriffen Sofortklebkraft (Tack) und Klebkraft (Peelstrength) behandelt und beschreibt definitionsgemäß die Begriffe 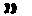 selbstklebend", 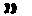 Haftkleber" und/oder 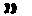 druckempfindliche Klebebänder", d.h. die dauerhafte Verklebung unter 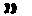 leichtem Andruck" ( 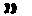 Pressure Sensitive Adhesives").

Diese Eigenschaft wird insbesondere bei den Haftklebern auf Basis Naturkautschuk durch Einmischen von klebrigmachenden Harzen (Tackifier) und Weichmachern mit relativ niedrigen Molekulargewichten erzielt.

Die zweite definitionsgemäße Eigenschaft der Haftkleber ist ihre einfache rückstandsfreie Wiederablösbarkeit nach dem Gebrauch. Dieses Verhalten ist im wesentlichen bestimmt durch die hochmolekularen Kautschukanteile als Elastomerkomponente, die dem System als Kohäsion (innere Festigkeit) die geforderte Festigkeit bei Scherbeanspruchung verleihen, was insbesondere für den Einsatz der Produkte bei höheren Temperaturen und/oder mechanischer Belastungen Bedeutung erhält. Durch zusätzliche Vernetzung, zum Beispiel über ionisierende Strahlen, reaktive Harzkomponenten oder andere chemische Vernetzer, kann diese Eigenschaft verstärkt werden.

Die Leistungsfähigkeit des Haftklebers ist also im wesentlichen bestimmt durch das ausgewogene Verhältnis von Adhäsions- und Kohäsions-Eigenschaften und durch Verträglichkeit, Homogenität und Stabilität der Abmischung von Massebestandteilen mit extrem hohen und relativ niedrigen mittleren Molekulargewichten, was bei der Masseherstellung in branchenüblichen Misch- und Knetmaschinen unter Verwendung von Lösemitteln relativ einfach zu erreichen ist.

Die lösungsmittelfreie Compoundierung und Verarbeitung von Selbstklebemassen hat sich dagegen im wesentlichen nur für die Verarbeitung von schmelzenden, sogenannten thermoplastischen Elastomeren durchgesetzt.
Der Masseherstellprozeß wird dabei zumeist in Doppelschneckenextrudern bei höheren Temperaturen in der Schmelze durchgeführt, die Beschichtung erfolgt zumeist mittels Breitschlitzdüsen.
Der Vorteil der Verwendung thermoplastischer Elastomerer besteht im wesentlichen in der Vereinfachung des Streichprozesses. Der Verzicht auf brennbare Lösemittel macht die Trockneranlagen mit ihrem aufwendigen Energieaufwand für das Verdampfen und Rückgewinnen der Läsemittel und den Einsatz explosionsgeschützter Anlagen überflüssig. Hotmeltbeschichtungsanlagen sind kompakt und erlauben erheblich höhere Streichgeschwindigkeiten. Zudem handelt es sich um eine umweltfreundliche Technologie, bei der keine Lösemittelemissionen auftreten.

Für die lösungsmittelfreie Compoundierung thermoplastischer Elastomerer werden gemäß dem Stande der Technik vorwiegend Blockcopolymeren mit Polystyrolblockanteilen verwendet. Der Vorteil dieser Substanzklasse besteht darin, daß die im Polymer befindlichen Polystyroldomänen oberhalb von 100 °C erweichen, wobei die Viskosität der Klebemasse stark abfällt und dadurch die leichte Verarbeitbarkeit gegeben ist. Nach Abkühlung auf Raumtemperatur bilden sich die Polystyroldomänen zurück und verleihen den auf thermoplastischen Elastomeren basierenden Haftklebern eine gewisse Scherfestigkeit.

Die thermoplastischen Elastomeren lassen sich mit klebkraftfördernden Kohlenwasserstoffharzen im Extruderprozeß einwandfrei compoundieren. Auf diese Weise läßt sich ein gewünschtes Klebkraftniveau relativ einfach erreichen. Die resultierenden Haftkleber bleiben jedoch empfindlich gegen Temperaturen oberhalb 40 °C. Kritisch ist dieses verbleibende 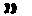 Kriechverhalten" für die auf dieser Basis hergestellten Selbstklebebänder für eine unbegrenzte Lagerstabilität (Verblocken der Rollen im Stapel insbesondere beim Transport in wärmere Klimazonen) und für die Anwendung bei höheren Arbeitstemperaturen (zum Beispiel als Abdeckbänder in der Automobillackierung, wo derartige Bänder trotz Nachvernetzung ihre Funktionsfähigkeit verlieren, indem der Haftkleber erweicht und die Scherfestigkeit zum Fixieren der Abdeckmaskenpapiere nicht mehr gewährleistet ist).

Aus diesem Grunde haben sich die bekannten Schmelzhaftkleber auf der Basis von Blockcopolymeren fast ausschließlich für Verpackungsbänder und Etiketten für den Einsatz bei Raumtemperaturen durchsetzen können.

Mit nicht-thermoplastischen Elastomeren, wie zum Beispiel Naturkautschuk, lassen sich hingegen die geforderten Scherfestigkeiten erreichen, aber die lösungsmittelfreie Herstellung und Verarbeitung von Naturkautschuk-Haftklebern stellt den Fachmann bis heute vor nicht gelöste Probleme.

Durch die extrem hochmolekularen Anteile des Kautschuks (mit M_{w} ≥ 1 Million) sind lösungsmittelfreie Selbstklebemassen mit der Schmelzhaftklebertechnologie unverarbeitbar oder aber die verwendeten Kautschuke müssen vor der Verarbeitung so stark in ihrem Molekulargewicht reduziert (abgebaut) werden, daß sie infolge dieses Abbaus ihre Eignung für leistungsfähige Selbstklebemassen einbüßen.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als 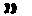 chemische Plastiziermittel" bekannt sind.
Der Mastikationsschritt ist in der Kautschuktechnologie nötig, um eine Erleichterung der Aufnahme der Zusatzstoffe zu erzielen.

Nach Römpp (Römpp Lexikon Chemie ― Version 1.5, Stuttgart/New York: Georg Thieme Verlag 1998) stellt die Mastikation eine gummitechnologische Bezeichnung für den Abbau langkettiger Kautschuk-Moleküle zur Erhöhung der Plastizität beziehungsweise Reduzierung der (Mooney-)Viskosität von Kautschuken dar. Die Mastikation wird durchgeführt durch Behandlung insbesondere von Naturkautschuk in Knetern oder zwischen Walzen bei möglichst niedrigen Temperaturen in Gegenwart von Mastikationshilfsmitteln (Mastizierhilfsmittel). Die dabei einwirkenden hohen mechanischen Kräfte führen zu einem 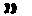 Zerreißen" der Kautschuk-Moleküle unter Bildung von Makroradikalen, deren Rekombination durch Reaktion mit Luftsauerstoff verhindert wird. Mastikationshilfsmittel wie aromatische oder heterocyclische Mercaptane beziehungsweise deren Zink-Salze oder Disulfide beschleunigen durch Begünstigung der Bildung von Primärradikalen den Mastikationsprozeß. Aktivatoren wie Metall- (Eisen-, Kupfer-, Cobalt-) Salze von Tetraazaporphyrinen oder Phthalocyaninen ermöglichen eine Erniedrigung der Mastikationstemperatur. Mastikationshilfsmittel werden bei der Mastikation von Naturkautschuk in Mengen von ca. 0,1 bis 0,5 Gew.-% in Form von Masterbatches eingesetzt, die eine gleichmäßige Verteilung dieser geringen Chemikalienmenge in der Kautschukmasse erleichtern.

Die Mastikation ist streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).
Die Degradation ist eine Kollektivbezeichnung für unterschiedliche Prozesse, die das Aussehen und die Eigenschaften von Kunststoffen verändern. Degradation kann zum Beispiel durch chemische, thermische, oxidative, mechanische oder biologische Einflüsse oder auch durch Strahleneinwirkung (wie (UV-)Licht) verursacht werden. Folge sind zum Beispiel Oxidation, Kettenspaltungen, Depolymerisation, Vernetzung beziehungsweise Abspaltung von Seitengruppen der Polymeren. Die Stabilität von Polymeren gegenüber einer Degradation kann durch Additive, zum Beispiel durch Zusatz von Stabilisatoren wie Antioxidantien oder Photostabilisatoren erhöht werden.

Nichtgesteuerte Degradation stellt oft ein unerwünschtes Phänomen dar. Diese kann durch das Schaffen einer Schutzgasatmosphäre gering gehalten werden.

Verschiedene Wege zur lösungsmittelfreien Herstellung und Verarbeitung von Kautschuk-Haftklebern wurden beschrieben.

In dem Patent CA 698 518 wird ein Prozeß beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vernetzung nur eingeschränkt zu erreichen.

Die Verwendung von Polymerblends, wo neben nicht-thermoplastischem Naturkautschuk auch Blockcopolymere im Verhältnis von ca. 1:1 eingesetzt werden, stellt im wesentlichen eine unbefriedigende Kompromißlösung dar, da weder hohe Scherfestigkeiten beim Einsatz der Selbstklebebänder bei höheren Temperaturen, noch deutliche Verbesserungen gegenüber der im Patent beschriebenen Eigenschaften ergibt.

JP 07 324 182 A2 beschreibt ein mehrstufiges Verfahren, in dem ein doppelseitigklebendes Band eine Haftkleberschicht auf Basis eines Acrylharzklebers und eine zweite Schicht aus einem Blend aus Isopren-Styrol-Elastomer, Naturkautschuk und nicht reaktivem Kohlenwasserstoffharz (Arkon P 100) aufweist. Dieses Band dient als Teppichverlegeband, wo ebenfalls keine erhöhten Anforderungen an die Scherfestigkeit bei höheren Temperaturen gestellt sind.

Der Einsatz von nicht-thermoplastischen Elastomeren wird ferner beschrieben in JP 95 331 197, wobei ein Isocyanat-reaktiver Naturkautschuk (Polyisopren gepfropft mit Maleinsäureester) mit einem mittleren Molekulargewicht M_{w} < 1 Million mit aliphatischen, nichtreaktiven Kohlenwasserstoffharzen Verwendung findet, der mit blockierten Isocyanaten (zum Beispiel Desmodur CT) vernetzt wird, wobei die Mischung bei 150 °C fünf Minuten lang vorvernetzt wird und nach anschließendem Ausstreichen auf PET-Folie bei 180 °C mehrere Minuten (zum Beispiel 15 Minuten) lang ausgehärtet wird. Diese Verfahrensweise macht deutlich, wie aufwendig eine Nachvernetzung zu erreichen ist, wenn der Naturkautschuk einem zu starken Abbau während des Herstellprozesses unterworfen wird.

In der Patentanmeldung JP 95 278 509 wird ein Selbstklebeband geschützt, bei welchem der Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat-, Terpen-Harzen zu erhalten, die zwischen 140 °C und 200 °C und einer Streichviskosität von 10 bis 50 x 10³ cps gut verarbeitbar sind, die jedoch eine anschließende extrem hohe ESH-Dosis (40 Mrad) erfordern, um die für den Gebrauch notwendige Scherfestigkeit zu gewährleisten.
Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, wird auch in den Patenten WO 94 11 175 A1, WO 95 25 774 A1, WO 97 07 963 A1 und entsprechend US 5,539,033, US 5,550,175 ausführlich dargestellt.
Hierbei werden die in der Haftklebertechnik gebräuchlichen Zusätze wie Tackifier-Harze, Weichmacher und Füllstoffe beschrieben.
Das jeweils offenbarte Herstellungsverfahren basiert auf einem Doppelschneckenextruder, der bei der gewählten Prozeßführung über Mastikation des Kautschuks und anschließender stufenweise Zugabe der einzelnen Zusätze mit einer entsprechenden Temperaturführung die Compoundierung zu einer homogenen Haftkleberabmischung ermöglicht.
Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit der fertig abgemischten Masse ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlvernetzung (ESH) unumgänglich, ebenso wie den Einsatz von reaktiven Substanzen als ESH-Promotoren zum Erzielen einer effektiven Vernetzungsausbeute.

Beide Verfahrensschritte sind in den genannten Patenten beschrieben, die gewählten ESH-Promotoren neigen aber auch zu unerwünschten chemischen Vernetzungsreaktionen unter erhöhten Temperaturen, dies limitiert den Einsatz bestimmter klebrigmachender Harze.

Aufgrund der unvermeidbaren hohen Produkttemperaturen verbietet eine Compoundierung im Doppelschneckenextruder den Einsatz thermisch aktivierbarer Substanzen, die zur Vernetzung der Klebmassen geeignet sind, wie zum Beispiel reaktiver (optional habgenierter) Phenolharze, Schwefel- oder Schwefelabspaltender Vernetzersysteme, weil es wegen der im Prozeß einsetzenden chemischen Vernetzungsreaktionen zu so erheblicher Viskositätserhöhung kommt, daß die resultierende Haftklebemasse ihre Streichfähigkeit einbüßt.

Zusammenfassend kann festgestellt werden, daß alle bekannten Verfahren sich durch extrem starken Kautschukabbau auszeichnen. Dieser erfordert bei der Weiterverarbeitung der Massen zu Selbstklebebändern extreme Vernetzungsbedingungen und hat außerdem ein teilweise eingeschränktes Anwendungsprofil, insbesondere für den Einsatz resultierender Selbstklebebänder bei höheren Temperaturen, zur Folge.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen läßt, sowie der geringen Verweilzeit und des engen Verweilzeitspektrums hat sich ihr Einsatzgebiet in letzter Zeit u.a. auch auf Compoundierprozesse erweitert, die eine besonders temperaturkontrollierte Fahrweise erfordern.
Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln können variiert werden und sind damit ein wichtiger Parameter zur Steuerung des Compoundierprozesses.
Die Materialien werden zwischen Zentral- und Planetenspindeln beziehungsweise zwischen Planetenspindeln und Schrägverzahnung des Walzenteils umgewälzt, so daß unter Einfluß von Scherenergie und äußerer Temperierung die Dispergierung der Materialien zu einem homogenen Compound erfolgt.

Die Anzahl der in jedem Walzenzylinder umlaufenden Planetenspindeln kann ausgewählt und somit den Erfordernissen des Prozesses angepaßt werden. Die Spindelanzahl beeinflußt das freie Volumen innerhalb des Planetwalzenextruders, die Verweilzeit des Materials im Prozeß und bestimmt zudem die Flächengröße für den Wärme- und Materialaustausch. Die Anzahl der Planetenspindeln hat über die eingeleitete Scherenergie Einfluß auf das Compoundierergebnis. Bei konstantem Walzenzylinderdurchmesser läßt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen läßt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

In diesem Zusammenhang wird auf die Patentanmeldungen beziehungsweise das Gebrauchsmuster DE 196 31 182 A1, DE 94 21 955 U1, DE 195 34 813 A1, DE 195 18 255 A1, DE 44 33 487 A1 verwiesen, die eine Übersicht zum Stande der Technik auf dem Gebiete der Planetwalzenextruder darstellen.

So wird darüber hinaus in DE 39 08 415 A1 die Verarbeitung von Gummimischungen beziehungsweise gummiähnlichen Mischungen mittels Planetwalzenextruder beschrieben. Vorbatche oder Fertigmischungen werden zum Zwecke einer Weiterverarbeitung auf Folgeeinnchtungen auf einem Planetwalzenextruder mastiziert und plastifiziert. Ebenfalls ist die Herstellung von Fertigmischungen im Planetwalzenextruder beschrieben: Hierbei werden zu den Gummivormischungen Vulkanisationssysteme und andere Komponenten zudosiert.

In der DE 297 10 235 U1 wird eine Vorrichtung zum Plastifizieren von Kunststoffmaterial offenbart, die aus mindestens zwei Planetwalzenextrudern in paralleler Anordnung besteht. Die Planetwalzenextruder speisen eine gemeinsame Austragsstufe, die ihrerseits ein Einschneckenextruder, ein Zwischenschneckenextruder oder eine Zahnradpumpe sein kann. Zwischen den Planetwalzenextrudern und der Austragsstufe kann weiterhin eine Entgasungseinheit geschaltet sein, die vorzugsweise aus einem mit Vakuum beaufschlagten Fallschacht besteht.

Auch in der US 3,825,236 wird die Verwendung eines Planetwalzenextruders gezeigt, wobei sich dieser innerhalb eines Einschneckenextruders befindet. In der DE 23 03 366 A1 wird eine extrusionsfähige Masse aus thermoplastischem oder duroplastischem Kunststoff in Schneckenstrangpressen mit Planetwalzen hergestellt, wobei der als Granulat oder als Pulver vorliegende Kunststoff nach dem Stopfen im Bereich der Planetenwalzen mastiziert und plastifiziert sowie bis auf Extrusionsdruck verdichtet wird. Als erfindungswesentlich wird dabei beansprucht, daß der gestopfte Kunststoff bis zur Bildung von Festkörpern vorverdichtet, anschließend im Einzugsbereich der Planetenwalzen unter Druckabbau zerkleinert sowie mastiziert, plastifiziert sowie bis auf Extrusionsdruck verdichtet wird.

Aufgabe der vorliegenden Erfindung ist es, ein Verfahren zur Verfügung zu stellen, mit dem sich, gegebenenfalls unter Verwendung von thermisch reaktiven Komponenten, druckempfindliche Selbstklebemassen auf der Basis nicht-thermoplastischer Elastomere lösemittelfrei kontinuierlich herstellen und gegebenenfalls inline beschichten lassen, ohne daß der Kautschuk eigenschaftsschädigend mastiziert werden muß.

Gelöst wird diese Aufgabe durch ein Verfahren, wie es im Hauptanspruch dargelegt ist. Gegenstand der Unteransprüche sind dabei vorteilhafte Weiterbildungen des Verfahrens. Schließlich umfaßt der Erfindungsgedanke auch Selbstklebebänder, die nach dem erfindungsgemäßen Verfahren hergestellt werden.

Demgemäß betrifft die Erfindung ein Verfahren zur kontinuierlichen lösungsmittelfreien und mastikationsfreien Herstellung von Selbstklebemassen auf Basis von nicht-thermoplastischen Elastomeren in einem kontinuierlich arbeitenden Planetwalzenextruder mit einem Füll- und einem Compoundierteil, wobei das Compoundierteil des Planetwalzenextruders zumindest von einem Walzenzylinder gebildet wird, bestehend aus den folgenden Schritten
a) Aufgabe der Festkomponenten der Selbstklebemasse wie Elastomere und Harze in den Füllteil des Planetwalzenextruders,
   gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil und
e) Austragen der Selbstklebemasse,
wobei die Temperaturen im Walzenzylinder innerhalb der Verfahrenslänge ein Maximum durchlaufen und damit höher sind als die Walzenzylindertemperaturen am Anfang und Ende des Planetwalzenextruders.

Als besonders vorteilhaft hat sich die Verwendung eines Planetwalzenextruders herausgestellt, dessen Compoundierteil zumindest aus zwei, besonders bevorzugt aber aus drei gekoppelten Walzenzylindern besteht, wobei jeder Walzenzylinder einen oder mehrere separate Temperierkreise aufweisen kann.

Im Unterschied zu sonst üblichen Herstellungsverfahren erfolgt im Planetwalzenextruder gemäß dem Verfahren vorliegender Erfindung keine eigenschaftsschädigende Mastikation der nicht-thermoplastischen Elastomeren, da diese hier nicht separat dem Einfluß hoher Scherenergie unterworfen werden, sondern stets zusammen mit einer oder mehreren flüssigen Komponenten verarbeitet werden. Diese Flüssigkomponenten können sowohl Weichmacher wie zum Beispiel Öle sein, aber auch Harze, die erst während des Compoundierprozesses bei Einwirken von Scherenergie und/oder äußerer Temperierung aufschmelzen. Durch die Anwesenheit dieser Flüssigkomponenten wird das Ausmaß an Fnktionsenergie derartig limitiert, daß die Mastikation des Kautschuks, d.h. der Molekulargewichtsabbau der Elastomeren, sowie hohe resultierende Compoundierungstemperaturen vermieden werden können.

Zudem weisen Planetwalzenextruder außerordentlich große Flächen auf, an denen es zum Materialabtausch und Oberflächenemeuerung kommt, mit der die über Friktion eingebrachte Scherenergie schnell abgeführt werden kann und auf diese Weise unerwünscht hohe Produkttemperaturen vermieden werden.

Der Füllteil des Walzenzylinders besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Die Anzahl der Planetenspindeln hat, wie bereits ausgeführt, über die eingeleitete Scherenergie Einfluß auf das Compoundierergebnis: Bei konstantem Walzenzylinderdurchmesser läßt sich mit größerer Spindelanzahl eine bessere Homogenisier- und Dispergierleistung beziehungsweise ein größerer Produktdurchsatz erzielen. Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen.

Für das erfindungsgemäße Verfahren ist es vorteilhaft, einen Planetwalzenextruder zu verwenden, dessen Compoundierteil - wie bereits oben dargelegt - durch Zusammenschalten von mindestens zwei Walzenzylindern verlängert ist. Zum einen ist dadurch trotz Anwesenheit friktionsreduzierender Komponenten zur Vermeidung der Kautschukmastikation ein vollständiges Aufschließen der Elastomerkomponenten sowie die gewünschte Homogenisier- und Dispergierleistung bei wirtschaftlichen Durchsatzraten möglich; zum anderen ermöglicht das Zusammenschalten vorzugsweise separat temperierter Walzenzylinder eine ausgewogene Temperaturführung des Prozesses, die die Verwendung von thermisch aktivierbaren Vernetzersystemen erlaubt.
Im vorderen Compoundierteil des Planetwalzenextruders erfolgt die Herstellung eines Vorcompounds vorteilhafterweise mit Walzenzylindertemperaturen, die deutlich unterhalb der Schmelz- oder Erweichungspunkte der zu compoundierenden Rohstoffe liegen. Dadurch ist gewährleistet, daß zum Beispiel die Harze in diesem Teil der Verfahrenslänge nicht bereits in einen klebrigen, zäh- oder dünnflüssigen Zustand übergehen und ein Abgleiten der nicht-thermoplastischen Elastomeren innerhalb der Spindelgänge, also ein hauptsächlisches Weiterbefördern ohne ausreichenden Eintrag an Scherenergie, vermieden wird.
Die bei niedrigen Prozeßtemperaturen vorcompoundierte Rohstoffmischung wird im Anschluß im mittleren Compoundierteil innerhalb einer Verfahrenslänge von einem bis zu zwei Dritteln der Gesamtverfahrenslänge bei erhöhten Temperaturen gefahren. Dadurch wird die Viskosität des Compounds und damit das Ausmaß an Friktion, die über den Planetwalzenextruder eingebracht wird, gemindert. Höhere erreichbare Endviskositäten der Klebmasse sind die Folge. Das nachfolgend letzte Drittel bis letzte Sechstel des Compoundierteils wird vorteilhafterweise wieder mit geringeren Temperaturen betrieben. Auf diese Weise wird der Homogenisierprozeß unterstützt sowie die Temperatur auf ein Niveau gebracht, das die Verwendung thermischer Vernetzer erlaubt.

Die Walzenzylindertemperaturen liegen im Bereich des ersten Sechstels bis ersten Drittels der Gesamtverfahrenslänge vorzugsweise unterhalb 30 °C, vorzugsweise unterhalb 20 °C.
Besonders bevorzugt sind dort Walzenzylindertemperaturen zwischen 5 °C und 15 °C.

Der Bereich des Temperaturmaximums sollte im Bereich des mittleren Drittels der gesamten Verfahrenslänge liegen, kann sich aber auch über zwei Drittel der Gesamtverfahrenslänge erstrecken.

Weiterhin haben sich unterschiedliche Temperaturbereiche als für das Verfahren besonders vorteilhaft herauskristallisiert, so Walzenzylindertemperaturen im Bereich des Maximums zwischen 20 °C bis 150 °C, vorzugsweise zwischen 35 °C und 120 °C und besonders bevorzugt zwischen 50 °C und 100 °C sowie Walzenzylindertemperaturen in dem Planetwalzenextruderbereich, der dem Temperaturmaximum nachfolgt, zwischen 10 °C und 140 °C, vorzugsweise zwischen 20 °C bis 90 °C und besonders bevorzugt zwischen 30 °C und 60 °C.
Die Temperierung des oder Walzenzylinder im Bereich des Maximums kann mit einem oder mehreren Heizkreisläufen erfolgen, die mit den oben aufgeführten Temperaturen betrieben werden können.

Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepaßt sein.

Zwischen zwei zusammengeschalteten Walzenzylindern befindet sich im allgemeinen ein Anlaufring, durch dessen freien Querschnitt die Zentralspindel führt und der die Planetenspindeln eines Walzenzylinders ortsfest halt. Anlaufringe können verschiedene freie Querschnitte aufweisen, womit der Rückstau des Produkts und damit der Füllgrad beziehungsweise das Ausmaß an Scherenergie variiert und an die Prozeßanforderungen angepaßt werden kann. Zusätzlich können die Anlaufringe mit radialen Bohrungen versehen sein, über die Flüssigkeiten wie zum Beispiel Weichmacheröle oder auch Schutzgase wie Stickstoff, Argon, Kohlendioxid o.ä. dem Compoundierteil des Planetwalzenextruders zugeführt werden können.

Die Zentralspindel sowie jeder Walzenzylinder sollten vorzugsweise über einen oder mehrere separate Temperier- beziehungsweise Kühlkreise verfügen, um ein Temperaturregime zu ermöglichen, das den Einsatz thermisch aktivierbarer Vernetzungssysteme erlaubt. In Fällen, wo dies nicht erforderlich ist, können die Temperierkreise zusammengeschalteter Walzenzylinder auch miteinander verbunden werden, um die Anzahl an Temperiergeräten möglichst gering zu halten.

Im Sinne der Erfindung sollten der Füllteil des Planetwalzenextruders und die Zentralspindel vorzugsweise nicht beheizt, sondern gekühlt werden, um ein Anbacken von Material auf der Füllschnecke zu vermeiden sowie einen effektiven Wärmeaustausch mit der Klebemasse zu gewährleisten.

Im Verfahren gemäß vorliegender Erfindung werden alle Feststoffkomponenten wie Elastomere, Füll- und Zuschlagstoffe, Harze, Alterungsschutzmittel usw. gemeinsam in den Einfüllbereich des Planetwalzenextruders eindosiert. Dabei können diese Stoffe sowohl als jeweils separate Komponenten, wie auch als gemeinsamer Premix oder auch als Teilvormischungen dem Compoundieraggregat zugegeben werden. Die Dosierung der Komponenten als Premix eignet sich besonders, wenn die Komponenten ähnliche Darreichungsformen beziehungsweise ähnliche Schüttdichten aufweisen, so daß sich auf diese Weise die Anzahl der Dosiersysteme gering halten läßt. Premixe lassen sich auf einfache Weise zum Beispiel in Pulvermischern herstellen. Zur Dosierung der einzelnen Festkomponenten eignen sich volumetrisch und gravimetrisch arbeitende Dosiersysteme in gängigen Ausführungen. Auch besteht die Möglichkeit, die Flüssigkomponenten oder auch nur Teile hiervon, wie zum Beispiel Weichmacheröl, einem Premix zuzugeben.

Die zudosierten Materialien werden von der Schnecke des Füllteils in den ersten Walzenzylinder des Planetwalzenextruders transportiert. Zwischen jedem Walzenzylinder können über Bohrungen in den Anlaufringen flüssige Komponenten wie zum Beispiel Weichmacheröle, Weichharze oder Harzschmelzen zugegeben werden. Über die Menge an Flüssigkeit, die bereits vor Einfluß an Scherenergie zugegeben wird, lassen sich sowohl Abbaugrad der Elastomere wie auch Compoundierungstemperatur der druckempfindlichen Klebemasse beeinflussen. Beispielsweise wird ein besonders geringer Molekulargewichtsabbau der Elastomeren erhalten, wenn ein flüssiger Weichmacher bereits dann zugegeben wird, wenn noch keinerlei Einfluß von Friktionsenergie erfolgte, also dieser entweder einem Feststoffpremix zugegeben wird, oder das Weichmacheröl zwischen Füllschnecke und erstem Walzenzylinder kontinuierlich zudosiert wird. Auch ein Aufteilen der Flüssigkomponenten als sogenannter split-feed über die Verfahrenslänge ist möglich und ist ein weiterer Parameter zur Steuerung des Prozesses hinsichtlich Elastomerabbau und Produkttemperatur.

Das erfindungsgemäße Verfahren erlaubt die Herstellung von hochleistungsfähigen Selbstklebemassen und insbesondere im Verbund mit einer nachgeschalteten Beschichtungs- und Vemetzungseinheit die Herstellung von hochleistungsfähigen Selbstklebebändern unter Erlangung besonderer Kostenvorteile.

Es besteht im wesentlichen aus den bereits dargelegten Verfahrensschritten, welche optional unter einer Schutzgasatmosphäre zur Vermeidung von oxidativem Polymerabbau durchgeführt werden können.

Im ersten Verfahrensschritt wird eine Masse aus den Elastomeren und den für die Herstellung von selbstklebenden Massen benötigten bekannten Zuschlagstoffen wie Füllstoffe, Alterungsschutzmittel, Weichmacher und Klebharze in einem Planetwalzenextruder lösungsmittelfrei hergestellt, wobei die Masse eine Endtemperatur von weniger als 150 °C, bevorzugt weniger als 130 °C, ganz besonders bevorzugt zwischen 70 °C und 110 °C aufweist. Die resultierende Hotmelt-Klebmasse weist eine Viskosität zwischen 20000 Pa*s und 190000 Pa*s, insbesondere eine Viskosität zwischen 45000 und 120000 Pa*s bei 110 °C und einem Schergefälle von 0,1 rad/s auf.

Im zweiten, vorteilhafterweise im Verbund mit dem Compoundierschritt im Planetwalzenextruder erfolgenden Verfahrensschritt wird die erfindungsgemäß hergestellte, druckempfindliche Hotmelt-Klebemasse mit einem Auftragswerk auf einen bahnförmigen Träger lösemittelfrei beschichtet.

Je nach Viskosität der Selbstklebemasse eignen sich verschiedene Verfahren zur Beschichtung der bahnförmigen Materialien, Selbstklebemassen mit Viskositäten bis 5000 Pa*s bei einem Schergefälle von 1 rad/s, wie sie beispielsweise bei Verwendung höherer Anteile an Weichmacherölen oder durch Zusatz von thermoplastischen Elastomeren zu den nicht-thermoplastischen Elastomeren erhalten werden, lassen sich mittels einer dem Planetwalzenextruder nachgeschalteten Extrusionsdüse beschichten, und zwar wird bevorzugt als Extrusionsdüse eine Kleiderbügelverteilkanaldüse eingesetzt. Um einen definierten, vollflächigen Masseauftrag auf dem bahnförmigen Material zu erhalten, ist es vorteilhaft, daß die Selbstklebemasse vor Eintritt in die Beschichtungsdüse einer Entgasung unterworfen wird, was besonders wichtig ist im Falle der Verwendung von Schutzgasen während des Compoundierprozesses im Planetwalzenextruder. Gemäß dem Verfahren der vorliegenden Erfindung erfolgt die Entgasung unter Einfluß von Vakuum vorzugsweise in Schneckenmaschinen, die zugleich die Druckverluste der Rohrleitungen und Beschichtungsdüse überwinden können. Hierfür werden Einschneckenextruder besonders bevorzugt, die zudem über eine Druckregelung verfügen, so daß die Beschichtung der bahnförmigen Trägermaterialien mit Masseaufträgen sehr geringer Schwankungsbreite erfolgen kann.

Eine weitere Möglichkeit zur Beschichtung der bahnförmigen Trägermaterialien mit der nach erfindungsgemäßen Verfahren hergestellten Selbstklebemasse ist die Verwendung von Walzenbeschichtungsauftragswerken oder Mehrwalzen-Beschichtungskalandern, die aus vorzugsweise drei, besonders bevorzugt aus vier Beschichtungswalzen bestehen, wobei die Selbstklebemasse bei Durchgang durch einen oder mehrere Walzenspalte vor Übergabe auf das bahnförmige Material auf die gewünschte Dicke geformt wird. Dieses Beschichtungsverfahren wird besonders dann bevorzugt, wenn die Viskositäten der Selbstklebemasse Werte von 5000 Pa*s bei einem Schergefälle von 1 rad/s übersteigt, da dann eine Beschichtung mit Extrusionsdüsen nicht mehr die erforderte Genauigkeit im Masseauftrag liefert.
Je nach Art des zu beschichtenden bahnförmigen Trägermaterials kann die Beschichtung im Gleichlauf- oder Gegenlaufverfahren erfolgen.

Die Beschichtung ist auf Walzenbeschichtungsauftragswerken oder Mehrwalzen-Beschichtungskalandem bei Temperaturen unterhalb von 100 °C möglich, so daß auch Selbstklebemassen beschichtet werden können, die thermisch aktivierbare Vernetzer enthalten. Zum Zwecke erhöhter Gasblasenfreiheit der beschichteten Klebmasse kann zwischen Planetwalzenextruder und Auftragswerk eine Vakuumentgasung, zum Beispiel eine Vakuumkammer, ein Entgasungsextruder oder ähnliches installiert sein.

Vorteilhafterweise im Verbund mit Masseherstellung und Beschichtung erfolgt in einem dritten Verfahrensschritt die Vernetzung der Selbstklebemasse auf dem Träger durch ionisierende Strahlung, wie zum Beispiel Elektronenstrahlen, so daß das resultierende Selbstklebeband scherfest und temperaturstabil wird. Auch UV-Strahlen können für die Vernetzung eingesetzt werden, hierbei müssen der Selbstklebemasse entsprechende UV-Promotoren zugesetzt werden.
Für eine darüber hinaus verbesserte Leistungsfähigkeit oder im Falle ESH-sensibler Träger kann die Vernetzung auch durch thermisch aktivierbare Vernetzer unter Temperatureinwirkung erfolgen.
Die hierzu notwendige Erwärmung der druckempfindlichen Hotmelt-Klebemasse kann mit Hilfe der vorbekannten Techniken erfolgen, insbesondere mit Hilfe von Hochtemperatur-Kanälen, aber auch mit Hilfe von Infrarot-Strahlem oder mittels hochfrequenter magnetischer Wechselfelder, beispielsweise HF- UHF- oder Mikrowellen.

Die Vernetzung der druckempfindlichen Hotmelt-Klebemasse kann weiterhin mittels einer Kombination von ionisierender Strahlung und thermisch aktivierbaren chemischen Vernetzem durchgeführt werden.

Es resultiert eine sehr scherfeste druckempfindliche Selbstklebemasse, die in ihren Eigenschaften gleichartigen, im Lösemittelverfahren hergestellten Selbstklebemassen vergleichbar ist.

Mit dem erfindungsgemäßen Verfahren sind fast ausnahmslos alle vorbekannten und in der Literatur beschriebenen Komponenten von kautschukbasierenden Selbstklebemassen lösemittelfrei verarbeitbar.

Vorteilhafterweise ist das nicht-thermoplastische Elastomer gewählt aus der Gruppe der Naturkautschuke oder der Synthesekautschuke oder es besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den nicht-thermoplastischen Elastomeren zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymensierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im 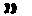 Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind bei dem erfindungsgemäßen Verfahren alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Des weiteren ist vom Erfindungsgedanken auch ein Selbstklebeband umfaßt, das unter Zuhilfenahme der druckempfindlichen Haftschmelzklebemasse hergestellt wird, indem auf ein bahnförmiges Material zumindest einseitig die Selbstklebemasse aufgetragen wird.

Als bahnförmige Trägermaterialien für die erfindungsgemäß hergestellten und verarbeiteten Selbstklebemassen sind je nach Verwendungszweck des Klebebandes alle bekannten Träger, gegebenenfalls mit entsprechender chemischer oder physikalischer Oberflächenvorbehandlung der Streichseite sowie antiadhesiver physikalischer Behandlung oder Beschichtung der Rückseite geeignet. Genannt seien beispielsweise gekreppte und ungekreppte Papiere, Polyethylen-, Polypropylen-, mono- oder biaxial orientierte Polypropylenfolien, Polyester-, PVC- und andere Folien, bahnförmige Schaumstoffe, beispielsweise aus Polyethylen und Polyurethan, Gewebe, Gewirke und Vliese.
Schließlich kann das bahnförmige Material ein beidseitig antiadhäsiv beschichtetes Material sein wie Trennpapiere oder Trennfolien.
Die Dicke der Setbstklebemasse auf dem bahnförmigen Material kann zwischen 10 µm und 2000 µm betragen, vorzugsweise zwischen 15 µm und 150 µm.

Schließlich kann auf einem Trennpapier die Selbstklebemasse in einer Dicke von 800 µm bis 1200 µm aufgetragen sein. Eine derartige Klebmassenschicht ist, insbesondere nach Vernetzung, als trägerloses doppelseitiges Selbstklebeband vielseitig anwendbar.

Aufgrund des hohen Molekulargewichts der nichtmastizierten Elastomere besteht mit dem erfindungsgemäßen Verfahren erstmalig die Möglichkeit, entweder vollständig auf eine Vernetzung der druckempfindlichen Klebemasse verzichten zu können oder aber eine effektive Vernetzung, die zum Beispiel Hochtemperaturanwendungen der nach diesem Verfahren hergestellten Klebebänder erlaubt, über energiereiche Strahlung durchführen zu können, ohne daß dafür Promotoren erforderlich sind. Weiterhin ist durch die Temperaturführung auf niedrigem Niveau jetzt auch erstmalig die Verwendung von thermisch aktivierbaren Vernetzern bei der Herstellung von lösungsmittelfreien Selbstklebemassen auf der Basis nicht-thermoplastischer Elastomere möglich.

Die nach dem erfindungsgemäßen Verfahren hergestellten Selbstklebemassen sind hoch scherfest. Die eingesetzten Kautschuke werden nicht einer Mastikation unterworfen, allerdings treten in den einzelnen Verfahrensschritten Degradationsprozesse auf, die die Eigenschaften der Selbstklebemasse aber nicht nachhaltig verschlechtern. Darüber hinaus sind diese Prozesse durch das erfindungsgemäß Verfahren eingeschränkt und beherrschbar.

Anhand der folgenden Beispiele soll die Erfindung näher beschrieben werden, ohne damit die Erfindung einschränken zu wollen.

Die eingesetzten Prüfmethoden sind im folgenden kurz charakterisiert:

Die Klebkraft (Schälfestigkeit) der Massen wurde nach AFERA 4001 bestimmt.

Die Scherfestigkeit der untersuchten Klebmassen wurde nach PSTC 7 (Holding Power) bestimmt. Alle angegebenen Werte wurden bei Raumtemperatur und den angegebenen Belastungen von 10 oder 20 N, mit einer Verklebungsfläche von 20x13 mm² bestimmt. Die Ergebnisse sind in Minuten Haltezeit angegeben.

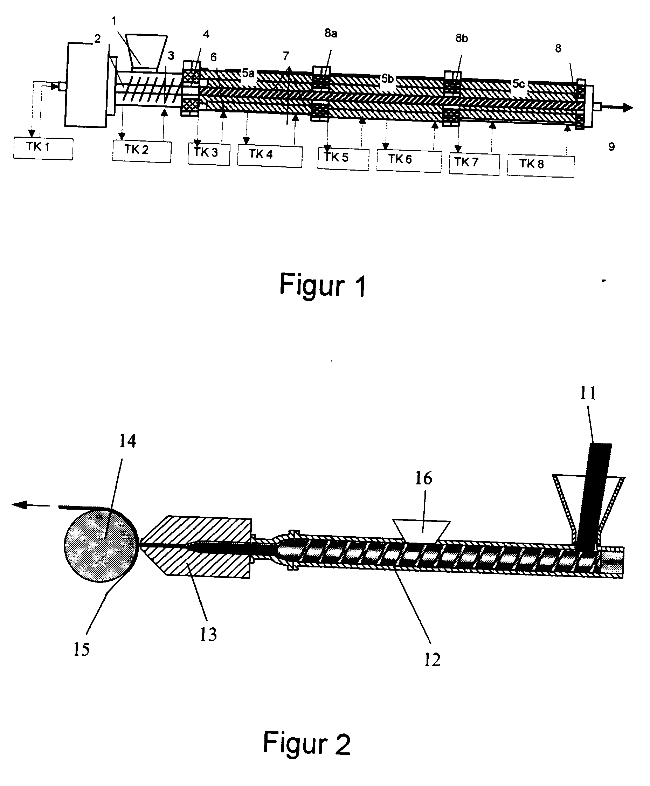

In den Beispielen wurde ein Planetwalzenextruder der Firma ENTEX Rust&Mitschke verwendet. Die Planetwalzenextruderdimensionen betrugen im Durchmesser 70 mm und in der Gesamtverfahrenslänge 1200 mm. Die Planetwalzenextruder-Konfiguration, die typischerweise in den nachfolgenden Beispielen verwendet wurde, zeigt Figur 1.

Der Planetwalzenextruder hat einen Füllteil (2) und einen Compoundierteil (5), der aus drei hintereinander geschalteten Walzenzylindern (5a-5c) bestand. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung des Walzenzylinders (5a-5c) ab. Die Drehzahl der Zentralspindel (6) konnte stufenlos bis 110 Umdrehungen pro Minute eingestellt werden.

Am Ende jedes Walzenzylinders (5a-5c) befindet sich ein Anlaufring (8), der die Planetenspindeln (7) ortsfest hält.

Über die Füllöffnung (1) wurden alle Feststoffkomponenten der lösungsmittelfreien Selbstklebemasse wie Elastomere, Harze, Füllstoffe, Antioxidantien usw. auf die Förderschnecke (3) des Füllteils (2) des Planetwalzenextruders dosiert. Die Förderschnecke (3) übergibt die Materialien danach auf die Zentralspindel (6) des ersten Walzenzylinders (5a). Zur Verbesserung des Materialeinzugs zwischen Zentralspindel (6) und Planetenspindeln (7) wurden im ersten Walzenzylinder (5a) sechs Planetenspindeln (7) mit alternierend unterschiedlichen Längen verwendet.

Die innen hohle Förderschnecke (3) und Zentralspindel (6) sind kraftschlüssig miteinander verbunden und besitzen einen gemeinsamen Temperierkreis. Jeder Walzenzylinder (5a-5c) des Compoundierteils (5) verfügte über zwei separate Temperierkreise. Über einen weiteren Temperierkreis wurde das Füllteil (2) gekühlt. Als Temperiermedium wurde Druckwasser verwendet, die Kühlung erfolgte mit Kühlwasser von 15 °C bis 18 °C.

Die separate Dosierung von Flüssigkeiten wie Weichmacheröl beziehungsweise Vernetzer erfolgte über den Einspritzring (4) vorm ersten Walzenzylinder (5a) beziehungsweise über die mit Bohrungen versehenen Anlaufringe (8a, 8b) oder in Kombination beider Möglichkeiten.

Die Temperatur der Selbstklebemasse wurde mittels Einstechfühler im Produktaustritt (9) ermittelt.

Weiterhin soll das erfindungsgemäße Verfahren mittels weiterer Figuren näher erläutert werden, ohne damit die Erfindung unnötig einschränken zu wollen. Es zeigen
- Figur 2: den Weg des Selbstklebemasse aus dem vorgeschalteten Aggregat, vorzugsweise einem Planetwalzenextruder bis zur Beschichtung auf ein Trägermaterial und
- Figur 3: eine Übersicht über das gesamte Verfahren in einer besonders vorteilhaften Ausführungsform.

Gemäß Figur 2 kommt der Strang (11) der Selbstklebemasse aus dem vorgeschalteten Aggregat, vorzugsweise einem Planetwalzenextruder, in einen Förderextruder (12). In diesem wird die Selbstklebemasse über eine Öffnung (16) mit Hilfe von Vakuum von Luft befreit und in eine Beschichtungsdüse mit einen Kleiderbügelverteilkanal (13) gefördert, mit der die Selbstklebemasse auf das über eine Kühlwalze (14) laufende Trägermaterial (15) aufgetragen wird.

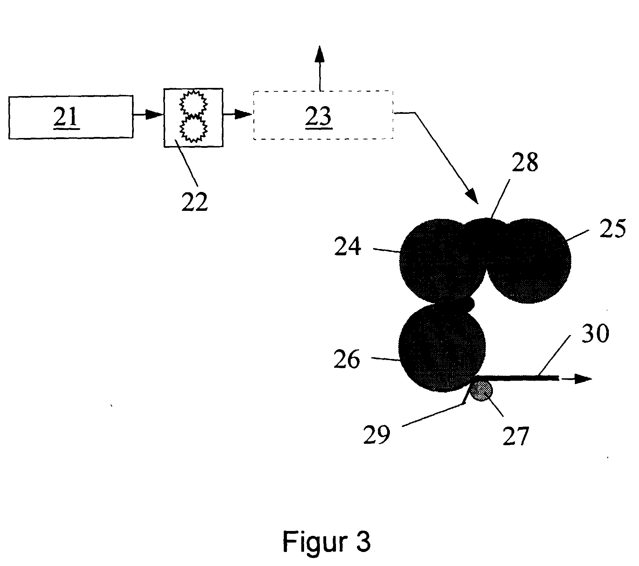

Die Figur 3 bietet schließlich eine Übersicht über das gesamte Verfahren in einer besonders vorteilhaften Ausführungsform. Im ersten Verfahrensschritt erfolgt dabei die Compoundierung der Selbstklebemasse (28) in einem Planetwalzenextruder (21). Die fertige Selbstklebemasse (28) wird in eine Schmelzepumpe (22) gefördert, die die Selbstklebemasse (28) in ein Walzenauftragswerk überführt.
Nach Compoundierung unter Schutzgasatmosphäre befindet sich zum Zwecke des Erzielens einer luftblasenfreier Selbstklebemasse (28) zwischen Schmelzepumpe (22) und Walzenauftragswerk ein Entgasungsextruder (23).
Das Walzenauftragswerk wird gebildet von einer Dosierwalze (24), einer Rakelwalze (25), die die Dicke der Selbstklebeschicht (26) auf dem Trägermaterial (29) bestimmt und einer Übertragungswalze (26). Auf einer Auflegewalze (27) werden schließlich die Selbstklebemasse (28) und das Trägermaterial (29) zusammengeführt und bilden somit ein Laminat (30).

### Beispiele

Die Effizienz der Temperaturführung in Planetwalzenextrudern hinsichtlich des Erreichens einer sehr guten Homogenität bei gleichzeitig geringem Molekulargewichtsabbau, resultierend in einer hohen Viskosität der Klebmassen, für das erfindungsgemäße Verfahren der lösungsmittelfreien Herstellung von Selbstklebemassen auf Basis nicht-thermoplastischer Elastomeren zeigen die nachfolgenden Beispiele. Verwendet wurde ein Planetwalzenextruder wie in Figur 1 prinzipiell dargestellt.

### Beispiel 1

Mit der Rezeptur aus Beispiel 1 wurde ein masking tape auf Papierträgerbasis hergestellt. Die Rezepturkomponenten und deren Anteile zeigt Tabelle 1.

**Tabelle 1**

| **Komponente** | **Gewichtsanteil [%]** |
|---|---|
| Naturkautschuk V 145 | 40 |
| Kreide Microsöhl® | 15 |
| Harz Hercotac 205® | 44 |
| Colan 46® | 1 |

Verwendet wurde ein Planetwalzenextruder mit drei gekoppelten Walzenzylindern analog Figur 1. Der erste Walzenzylinder war mit sechs Planetenspindeln bestückt, die zwei nachfolgenden mit je 7 Planetenspindeln. Die Drehzahl der Zentralspindel wurde auf 110 Umdrehungen pro Minute eingestellt. Der Anlaufring nach dem ersten Walzenzylinder hatte einen freien Querschnitt von 44 mm, der Anlaufring nach dem zweiten Walzenzylinder einen von 46 mm. Als Temperiermedium für die Zentralspindel (TK 1) und des Einfüllbereichs (TK2) wurde Wasser mit einer Vorlauftemperatur von 12 °C verwendet. Für den Compoundierteil des Planetwalzenextruders wurden nachfolgende Vortauftemperaturen zur Temperierurig der Walzenzylinder eingestellt: Temperierkreis 3 wurde mit 18 °C; die Temperierkreise 4 bis 7 mit 75 °C und Temperierkreis 8 mit 35 °C betrieben.

Sämtliche Rohstoffe wurden separat über gravimetrische Flex-Wall® -Dosiersysteme der Fa. BRABENDER in den Füllteil des Planetwalzenextruders eindosiert. Der Kautschuk wurde vorab in einer Schneidmühle der Fa. PALLMANN auf eine Teilchengröße von 8 bis 10 mm granuliert und zur besseren Dosierbarkeit talkumiert. Die Gesamtmenge aller Dosierkomponenten betrug 65 kg/h.

Die am Austritt des Planetwalzenextruders gemessene Klebemassetemperatur betrug 97 °C; und die mittels RDS Rheometer gemessene komplexe Viskosität der Masse wurde zu 113000 Pas bestimmt (bei 0,1 rad/s und 110 °C).

Die so erhaltene Klebmasse wurde unmittelbar nach dem Herstellprozeßauf auf einen schwachgekreppten, nach branchenüblichen Verfahren imprägnierten, mit bekannten Release- und Primerschicht ausgerüsteten Papierträger, welcher ein Flächengewicht von 68 g/m² aufweist, mit einer Schichtdicke von 40 µm aufgebracht.

Die Beschichtung der Klebemasse erfolgte mit Hilfe eines 4-Walzenkalanderauftragswerkes der Fa. Farrel in einer Arbeitsbreite von 1200 mm mit Massezuführung durch einen Einschneckenförderextruder. Die Beschichtung erfolgte im Gleichlauf, d.h. mit Hilfe einer bahnführenden Anlegewalze (Gummi) wurde von der dritten auftragsbestimmenden Kalanderwalze der Klebstoffauftrag auf das gekreppte Papier übertragen.

Der aus einem Förderextruder austretende Klebstoff wurde mit Hilfe eines Förderbandes changierend in den oberen Walzenspalt des Kalanders gefördert. Durch den eingestellten Spalt zwischen den beiden oberen Walzen des Kalanders wird eine Massevordosierung erreicht, die einen etwa 2 bis 3 cm dicken Klebstoff-Film erzeugt. Dieser vorgeformte Massefilm wird durch die dritte Walze abgenommen und durch den zur dritte Walze eingestellten Spalt auf den gewünschten Masseauftrag ausgeformt. Die dritte Walze übergibt mit Bahngeschwindigkeit im Gleichlauf an das über eine Anlegewalze geführte Substrat.

Zwischen den Walzen wurde eine Differenzgeschwindigkeit eingestellt im Verhältnis 6:1. Die ersten beiden Walzen waren auf 108 °C temperiert, die beiden letzen Walzen auf 80 °C. Die Beschichtungsgeschwindigkeit betrug 135 m/min.

Das so erhaltene Klebeband weist eine Klebkraft von 4 N/cm und Scherstandzeiten (10N) von 450 min auf.

### Beispiel 2

Eine weitere Möglichkeit zur Herstellung eines Abdeckbandes auf Papierträgerbasis ist in Beispiel 2 dargestellt. Die Rezepturkomponenten und deren Anteile zeigt Tabelle 2.

**Tabelle 2**

| **Komponente** | **Gewichtsanteil [%]** |
|---|---|
| Naturkautschuk V 145 | 35 |
| Kreide Microsöhl® | 30 |
| Harz Hercotac 205® | 34 |
| Colan 46® | 1 |

Zur Klebmasseherstellung wurde ein Planetwalzenextruder gemäß Figur 1 verwendet. Die ersten beiden Walzenzylinder waren mit je sechs Planetenspindeln bestückt, der dritte mit sieben Planetenspindeln. Beide Anlaufringe hatten einen freien Durchmesser von 46 mm. Die Walzenzylinder 1 bis 2 wurden mit einer Vorlauftemperatur von 8 °C betrieben und die Walzenzylinder 3 bis 4 mit einer Temperatur von 25 °C. Die Temperierkreise 5 bis 7 stellten den Bereich des Temperaturmaximums dar und wiesen eine Vorlauftemperatur von 60 °C auf. Für den am Ende der Verfahrenslänge befindlichen Temperierkreis 8 wurde eine Vorlauftemperatur von 55 °C gewählt.

Die Kautschukgranulierung und die Rohstoffdosierung erfolgte analog Beispiel 1. Die Rohstoffe wurden im Planetwalzenextruder mit einem Durchsatz von 55 kg/h bei einer Drehzahl der Zentralspindel von 75 Umdrehungen pro Minute zu einer homogenen Kautschuk-Selbstklebemasse verarbeitet.
Die Temperatur des Compounds lag im Austritt des Extruders bei 87 °C Die komplexe dynamische Viskosität betrug bei 0,1 rad/s bei 110°C 76000 Pas.

Die Beschichtung erfolgte bei 175 m/min Bahngeschwindigkeit in einer Schichtstärke von 40 µm analog Beispiel 1. Das 4-Walzenauftragswerk hatte eine Arbeitsbreite von 500 mm, alle Walzen waren mit 102 °C temperiert.

Das auf diese Weise erhaltene masking tape wies eine Klebkraft von 2,0 N/cm und eine Scherstandzeit (10 N) von 80 min auf.

### Beispiel 3

Beispiel 3 dient der Darstellung, wie das erfindungsgemäße Verfahren zur Herstellung eines Allzweckklebeband auf Gewebeträgerbasis genutzt werden kann.

**Tabelle 3**

| **Komponente** | **Gewichtsanteil [%]** |
|---|---|
| Naturkautschuk V 145 | 32 |
| Kreide Microsöhl® | 17 |
| Harz Hercotac 205® | 38 |
| Ondina G 33® | 12 |
| Colan 46® | 1 |

Die Masseherstellung im Planetwalzenextruder erfolgte analog Beispiel 1. Der Planetwalzenxtruder wurde mit einer Drehzahl von 90 Umdrehungen pro Minute bei einer Produktrate von 45 kg/h betrieben. Die flüssige Komponente, das Paraffinöl Ondina, wurde wurde als sogenannter split-feed mittels zweier Membranpumpen über die Anlaufringe nach dem ersten und zweiten Walzenzylinder zu gleichen Anteilen zudosiert. Die festen Rohstoffe wurden wiederum über gravimetrische Dosiersysteme als Einzelkomponenten auf den Füllteil des Planetwalzenextruder aufgegeben.

Die Temperierkreise 1 bis 3 wurden mit Kühlwasser von 9 °C betrieben. Der Temperierkreis 4 wurde mit 55 °C, die Temperierkreise 5 bis 6 mit 95 °C, der Temperierkreis 7 mit 70 °C beheizt. Der dem Bereich des Temperaturmaximums nachgeschaltete Walzenzylinder hatte eine Vorlauftemperatur von 55 °C.
Die Masseaustrittstemperatur betrug 91 °C, die komplexe dynamische Viskosität 43000 Pas (bei 0,1 rad/s und 110 °C).

Die so erhaltene Klebmasse wurde auf ein Polyester-/Baumwoll-Mischgewebe mit einer Fadendichte 22/10 mit zulaminierter 80 µm Polyethylenschicht, welche rückseitig mit einem branchenüblichen Carbamat-Release-Lack ausgerüstet ist, mit einer Schichtdicke von 137 µm aufgebracht.

Die Beschichtung erfolgte nach dem Verfahren aus Beispiel 1. Anstelle der Papierträgerbahn wurde hier das Polyester/Baumwoll-Mischgewebe und die Polyethylenfolie über die Anlegewalze geführt und auf das Polyester/Baumwoll-Mischgewebe die über den Walzenbeschichtungskalander ausgeformte 137 µm dicke Klebstoffschicht beschichtet. Die Beschichtung erfolgte mit 145 m/min in einer Arbeitsbreite von 1200 mm. Die Beschichtungswalzen wurden im Verhältnis von 6:1 betrieben.

Das so hergestellte Band hat eine Klebkraft von 3,5 N/cm und ist als Allzwecklebeband für verschiedenste Zwecke geeignet.

## Patentansprüche

1. Verfahren zur kontinuierlichen lösungsmittelfreien und mastikationsfreien Herstellung von Selbstklebemassen auf Basis von nicht-thermoplastischen Elastomeren in einem kontinuierlich arbeitenden Planetwalzenextruder mit einem Füll- und einem Compoundierteil, wobei das Compoundierteil des Planetwalzenextruders zumindest von einem Walzenzylinder gebildet wird, bestehend aus
a) Aufgabe der Festkomponenten der Selbstklebemasse wie Elastomere und Harze in den Füllteil des Planetwalzenextruders, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil und
f) Austragen der Selbstklebemasse,
wobei die Temperaturen im Walzenzylinder innerhalb der Verfahrenslänge ein Maximum durchlaufen und damit höher sind als die Walzenzylindertemperaturen am Anfang und Ende des Ptanetwalzenextruders.

2. Verfahren nach Anspruch 1, dadurch gekennzeichnet, daß das Compoundierteil des Planetwalzenextruders zumindest aus zwei, besonders bevorzugt aber aus drei gekoppelten Walzenzylindern besteht.

3. Verfahren nach Anspruch 2, dadurch gekennzeichnet, daß jeder Walzenzylinder des Planetwalzenextruders mindestens die Hälfte, vorzugsweise mehr als ¾ der möglichen Anzahl an Planetenspindeln enthält.

4. Verfahren nach den Ansprüchen 1 bis 3, dadurch gekennzeichnet, daß die Selbstklebemasse nach dem Austragen aus dem Aggregat unter dem Einfluß von Vakuum von Gasblasen befreit wird.

5. Verfahren nach den Ansprüchen 1 bis 4, dadurch gekennzeichnet, daß die Selbstklebemasse auf ein bahnförmiges Material beschichtet wird.

6. Verfahren nach Anspruch 5, dadurch gekennzeichnet, daß zwischen Planetwalzenextruder und Beschichtungsvorrichtung eine Schmelzepumpe oder ein Extruder zur Klebmasseförderung, insbesondere ein Entgasungsextruder, angeordnet ist, der drehzahl- oder druckgeregelt, vorzugsweise druckgeregelt betrieben wird.

7. Verfahren nach den Ansprüchen 5 und 6, dadurch gekennzeichnet, daß die Beschichtung des bahnförmigen Materials mit einem Walz- oder Kalanderwerk erfolgt, wobei die Selbstklebemasse bei Durchgang durch einen oder mehrere Walzenspalte vor Übergabe auf das bahnförmige Material auf die gewünschte Dicke geformt wird.

8. Verfahren nach den Ansprüchen 5 und 6, dadurch gekennzeichnet, daß die Beschichtung des bahnförmigen Materials mit einer Extrusionsdüse erfolgt, die durch einen Extruder, insbesondere einen Entgasungsextruder, beschickt wird.

9. Verfahren nach Anspruch 8, dadurch gekennzeichnet, daß Extrusionsdüse als Kleiderbügelverteilkanaldüse ausgelegt ist.

10. Verfahren nach den Ansprüchen 1 bis 9, dadurch gekennzeichnet, daß das beschichtete Material in eitlem der Beschichtung nachfolgenden Schritt vernetzt wird.

11. Verfahren nach Anspruch 10, dadurch gekennzeichnet, daß das beschichtete Material ohne Promotoren mittels Elektronenstrahlen vernetzt wird.

12. Verfahren nach Anspruch 10, dadurch gekennzeichnet, daß das beschichtete Material thermisch vernetzt wird.

13. Verfahren nach mindestens einem der vorhergehenden Ansprüche, dadurch gekennzeichnet, daß die Walzenzylindertemperaturen im Bereich des ersten Sechstels bis ersten Drittels der Gesamtverfahrenslänge unterhalb 30 °C, vorzugsweise unterhalb 20 °C liegen.

14. Verfahren nach mindestens einem der vorhergehenden Ansprüche, dadurch gekennzeichnet, daß der Bereich des Temperaturmaximums ein Drittel der gesamten Verfahrenslänge ausmacht, sich vorzugsweise über zwei Drittel der Gesamtverfahrenslänge erstreckt.

15. Verfahren nach mindestens einem der vorhergehenden Ansprüche, dadurch gekennzeichnet, daß die Walzenzylindertemperaturen im Bereich des Maximums zwischen 20 °C bis 150 °C, vorzugsweise zwischen 35 °C und 120 C und besonders bevorzugt zwischen 50 °C und 100 °C liegen.

16. Verfahren nach mindestens einem der vorhergehenden Ansprüche, dadurch gekennzeichnet, daß die Walzenzylindertemperaturen in dem Planetwalzenextruderbereich, der dem Temperaturmaximum nachfolgt, zwischen 10 °C und 140 °C, vorzugsweise zwischen 20 °C bis 90 °C und besonders bevorzugt zwischen 30 °C und 60 °C liegen.

17. Verfahren nach mindestens einem der vorhergehenden Ansprüche, dadurch gekennzeichnet, daß die Walzenzylindertemperierung im Bereich des Maximums aus einem oder mehreren Heizkreisläufen bestehen kann.

18. Verfahren nach mindestens einem der vorhergehenden Ansprüche, dadurch gekennzeichnet, daß die nicht-thermoplastischen Elastomere ausgewählt sind aus der Gruppe der Naturkautschuke, der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) der Polyolefine, und der Polyurethane und/oder deren Blends.

19. Verfahren nach mindestens einem der vorhergehenden Ansprüche, dadurch gekennzeichnet, daß den nicht-thermoplastischen Elastomeren thermoplastische Elastomere mit einem Gewichtsanteil von 10 bis 50 Gew.-% zugegeben werden.

20. Verfahren nach mindestens einem der vorhergehenden Ansprüche, dadurch gekennzeichnet, daß die Vernetzer aus der Gruppe der Schwefel-, der beschleunigten Schwefel-, der reaktiven Phenolharz- oder Diisocyanatvernetzungssysteme ausgewählt werden.

21. Verfahren nach mindestens einem der vorhergehenden Ansprüche, dadurch gekennzeichnet, daß die Vernetzer thermisch aktivierbar sind und vorzugsweise aktiviert werden bei Temperaturen über 50 °C, bevorzugt bei Temperaturen von 100 °C bis 160 °C, ganz besonders bevorzugt bei Temperaturen von 110 °C bis 140 °C.

22. Selbstklebeband, erhalten nach mindestens einem der vorhergehenden Ansprüche, dadurch gekennzeichnet, daß auf ein bahnförmiges Material zumindest einseitig die Selbstklebemasse aufgetragen wird.

23. Selbstklebeband nach Anspruch 18, dadurch gekennzeichnet, daß die Dicke der Selbstklebemasse auf dem bahnförmigen Material beträgt zwischen 10 µm und 2000 µm, vorzugsweise zwischen 15 µm und 150 µm.

24. Selbstklebeband nach Anspruch 18, dadurch gekennzeichnet, daß auf einem Trennpapier die Selbstklebemasse in einer Dicke aufgetragen ist von 800 µm bis 1200 µm, besonders 1000 µm.

25. Selbstklebeband nach Anspruch 18, dadurch gekennzeichnet, daß das bahnförmige Material ein beidseitig antiadhäsiv beschichtetes Material ist.
